# EUROPEAN PATENT APPLICATION

(11) **EP 4 623 682 A1**
(43) Date of publication of application: **01.10.2025**
(21) Application number: 25165954.6
(22) Date of filing: 25.03.2025
(51) Int. Cl.: A01K 87/06

(54) **FISHING REEL SEAT FOR IMPROVED SENSITIVITY**

(30) Priority: 25.03.2024 US 202463569447 P
(71) Applicant: Pure Fishing, Inc., Spirit Lake, IA 51360 (US)
(72) Inventor: WESTERFIELD, James, BELLINGHAM, WA 98226 (US)
(74) Representative: Cabinet Beau de Loménie

(57) **Abstract**

A reel seat (10) for a fishing rod having a rod blank (26) with a butt end and a rod tip includes a body (14) with proximal and distal ends and a middle portion, with only the proximal end being directly secured to the rod blank, the middle portion and distal end of the body being spaced from an exterior surface of a portion of the rod blank passing therethrough, a first opening (58) in a bottom side of the distal end of the body allowing a user's index finger to directly contact the rod blank, and a second opening (62) in the bottom side of the middle portion of the body allowing at least one of the user's ring and pinky fingers to directly contact the rod blank, and an integral connection section separating the first and second openings from one another.

## Description

### TECHNICAL FIELD

The present application relates to fishing reels, particularly to a reel seat that provides an angler improved sensitivity when experiencing a pull on the fishing line.

### BACKGROUND

Reel seats provide a connection for a reel to be secured to a fishing rod. The reel seat also provides a handle for an angler to grasp while using the fishing rod. Traditionally a reel seat encloses a portion of rod and can be used by an angler as a handle. However, the reel seat dampens vibrations from the rod, reducing the sensitivity of the fishing rod. As a result, a reel seat that provides better sensitivity to an angler is desired.

### SUMMARY

An aspect of the present disclosure is to provide a reel seat for a fishing rod having a rod blank with a butt end and a rod tip includes a body with proximal and distal ends and a middle portion, with only the proximal end being directly secured to the rod blank, the middle portion and distal end of the body being spaced from an exterior surface of a portion of the rod blank passing therethrough, a first opening in a bottom side of the distal end of the body allowing a user's index finger to directly contact the rod blank, and a second opening in the bottom side of the middle portion of the body allowing at least one of the user's ring and pinky fingers to directly contact the rod blank, and an integral connection section separating the first and second openings from one another.

According to another aspect of the present disclosure, a reel seat is provided with a front reel foot cavity on a top side adjacent the distal end of the body.

According to another aspect of the present disclosure, a reel seat is provided with a rear reel foot component configured to slide onto and along the proximal end of the body and having a rear reel foot cavity.

According to another aspect of the present disclosure, a proximal end of a body of a reel seat includes external threads, and the reel seat also includes a locking nut having internal threads configured to engage the external threads of the body and be advanced or retracted along the proximal end of the body to position the rear reel foot component.

According to another aspect of the present disclosure, there is provided a reel seat for a fishing rod having a rod blank with a butt end and a rod tip including a body having a proximal end and a distal end and middle portion therebetween, wherein only the proximal end of the body is directly secured to the rod blank adjacent the butt end of the rod tip, wherein the middle portion and distal end of the body are spaced from an exterior surface of a portion of the rod blank passing through the middle portion and distal end of the body; the body further including a first opening in a bottom side of the distal end of the body, the first opening configured to allow a user's index finger to directly contact the rod blank; a second opening in the bottom side of the middle portion of the body, the second opening configured to allow at least one of the user's ring and pinky fingers to directly contact the rod blank; an integral connection section separating the first and second openings from one another; and external threads adjacent the proximal end of the body; a rear reel foot component configured to slide onto and along the proximal end of the body and having a rear reel foot cavity; and a locking nut having internal threads and configured to engage the external threads of the body and be advanced or retracted along the proximal end of the body to position the rear reel foot component.

These and other aspects are merely illustrative of the innumerable aspects associated with the present disclosure and should not be deemed as limiting in any manner. These and other aspects, features, and advantages of the present disclosure will become apparent from the following detailed description when taken in conjunction with the referenced drawings.

### BRIEF DESCRIPTION OF THE DRAWINGS

Reference is now made more particularly to the drawings, which illustrate the best presently known mode of carrying out the present disclosure and wherein similar reference characters indicate the same parts throughout the views.
FIG. 1 is side view of a reel seat assembly according to an embodiment of the present disclosure.
FIG. 2 is a cross section view of the reel seat assembly of FIG. 1 along a centerline that goes from a proximate end to a distal end.
FIG. 3 is a side view of a reel seat of the reel seat assembly of FIG. 1.
FIG. 4 is a schematic side view identifying regions of a reel seat according to an embodiment of the present disclosure.
FIG. 5 is a schematic side view identifying regions of a reel seat according to another embodiment of the present disclosure.

### DETAILED DESCRIPTION

The following description of technology is merely exemplary in nature of the subject matter, manufacture, and use of one or more inventions, and is not intended to limit the scope, application, or uses of any specific invention claimed in this application or in such other applications as may be filed claiming priority to this application, or patents issuing therefrom. The following definitions and non-limiting guidelines must be considered in reviewing the description of the technology set forth herein.

In the following detailed description numerous specific details are set forth in order to provide a thorough understanding of the present disclosure. However, it will be understood by those skilled in the art that the present disclosure may be practiced without these specific details. For example, the present disclosure is not limited in scope to the particular type of industry application depicted in the figures. In other instances, well-known methods, procedures, and components have not been described in detail so as not to obscure the present disclosure.

The headings and sub-headings used herein are intended only for general organization of topics within the present disclosure and are not intended to limit the disclosure of the technology or any aspect thereof. In particular, subject matter disclosed in the "Background" may include novel technology and may not constitute a recitation of prior art. Subject matter disclosed in the "Summary" is not an exhaustive or complete disclosure of the entire scope of the technology or any embodiments thereof. Classification or discussion of a material within a section of this specification as having a particular utility is made for convenience, and no inference should be drawn that the material must necessarily or solely function in accordance with its classification herein when it is used in any given composition.

The citation of references herein does not constitute an admission that those references are prior art or have any relevance to the patentability of the technology disclosed herein. All references cited in the "Detailed Description" section of this specification are hereby incorporated by reference in their entirety.

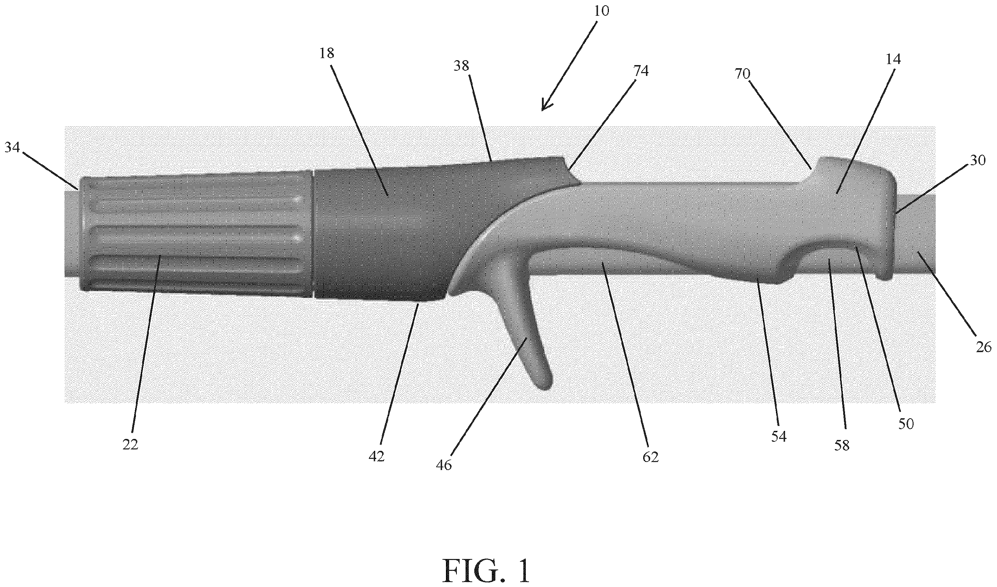

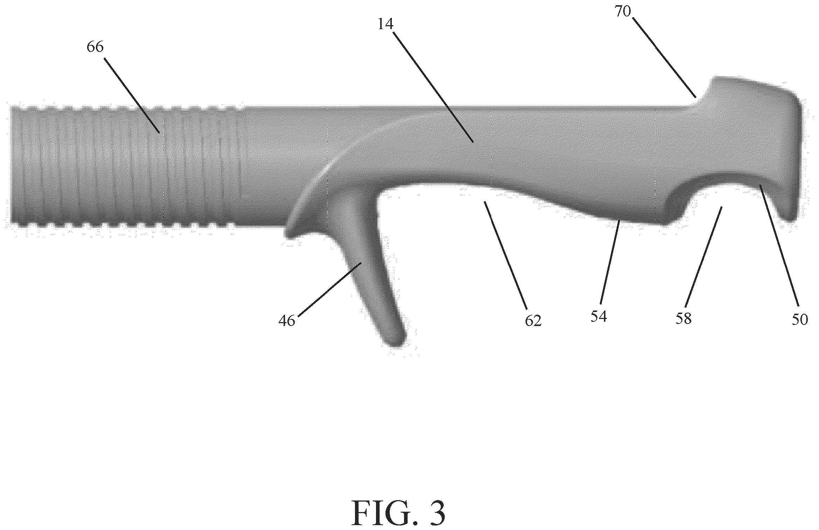

FIGS. 1 - 4 illustrate an embodiment of a reel seat assembly 10 according to the present disclosure. The reel seat assembly 10 may comprise a three-part arrangement including a body 14, a rear reel capture component 18, and a locking nut 22. The reel seat assembly 10 surrounds and is coupled to a rod blank 26. The reel seat assembly 10 has a distal end 30 and a proximal end 34 as well as a top side 38 and a bottom side 42. The body 14 may include a trigger extension 46 in some embodiments.

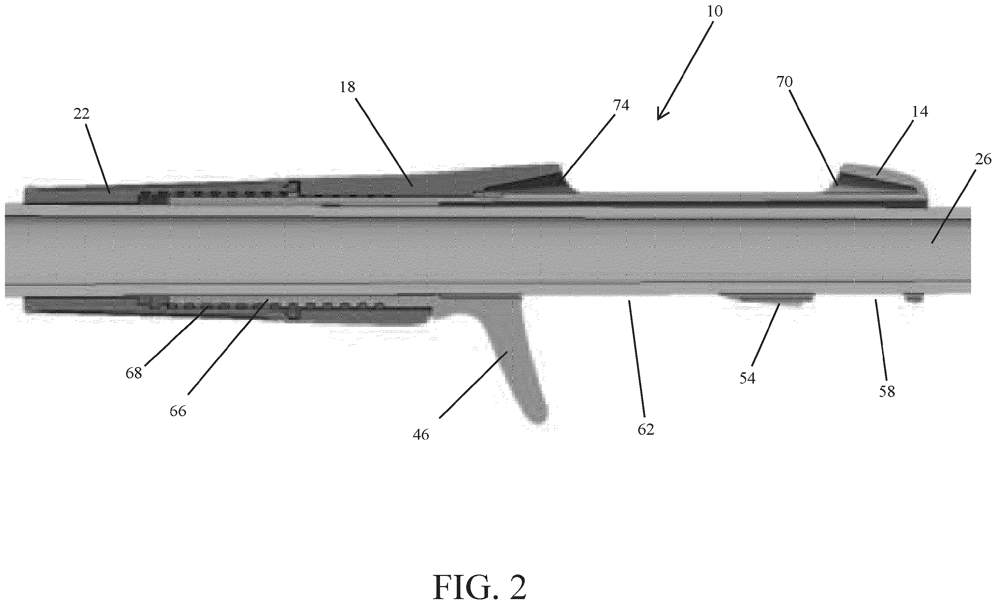

The proximal end 34 of the body 14 may be secured onto the rod blank 26 by adhesive or other suitable means. The remaining portions of the body 14, in particular the middle and distal portions of the body 14, are preferably spaced away from the exterior surface of the rod blank 26, as shown in the cross-sectional view of FIG. 2. The spacing of the middle and distal portions of the body 14 allow for limited radial movement, or "floating", of the rod blank 26 within those portions of the body 14.

The bottom side 42 of the body 14 is provided with first 58 and second 62 openings that are separated by a connecting section 54. The connecting section 54 forms part of the body 14 and is integral therewith. The connecting section 54 enhances the structural rigidity of the body 14 and provides a surface allowing a user to support the rod and reel with a portion of the user's hand without having to squeeze the rod blank 26 directly. The first 58 and second 62 openings in the body 14 allow for some of the user's fingers to directly contact the rod blank 26 to detect vibration of the rod blank 26.

In preferred embodiments, the second opening 62 of the body 14 is positioned to accommodate the ring and pinky fingers of the user. These fingers are associated with a branch of the ulnar nerve, which is isolated from more complex nerves and, as a result tends to be more sensitive to touch, and vibration, than the other fingers. Therefore, the direct contact between the ring and pinky fingers of a user and the rod blank 26 enhance the user's ability to detect vibration that is transmitted along the rod blank 26 from the rod tip to the reel seat, for example, when a fish strikes.

The first opening 58, which is located adjacent to the distal end 30 of the body 14, allows the user's index finger to make direct contact with the rod blank 26. The greater distance of first opening 58 from the proximal portion of the body 14 that is secured to the rod blank 26 allows for a larger amplitude of vibration than at the second opening 62. Therefore, while the index finger is not as sensitive to touch and vibration, the greater vibration amplitude at the first opening 58 similarly provides a heightened noticeability of any vibration to the user.

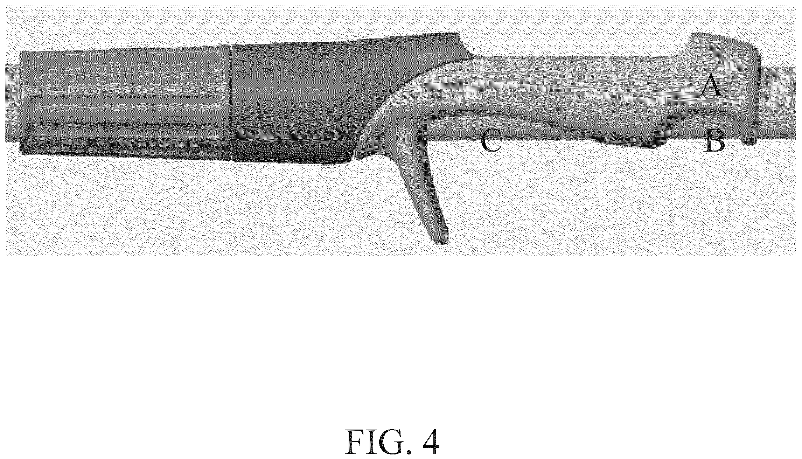

FIG. 4 identifies the foregoing areas of the body as they relate to the transmission of vibration from the rod tip to the reel seat along the rod blank 26. As a result of the relative stiffness of the body 14, there will generally be minimal to no vibration occurring at region A of the body 14. In contrast, regions B and C, which are located at the first 58 and second 62 opening and where the index and ring/pinky fingers, respectively, contact the rod blank 26, experience significantly larger vibration. Further, the contrast between the relatively stiff and non-vibrating portion of the body 14 adjacent the first opening 58 makes the vibration of the rod blank 26 at this location even more noticeable.

The rear reel capture component 18 is configured to slide onto the proximal portion of the body 14 and includes a cavity 74 that is further configured to engage and confine the rear end of the reel foot. The locking nut 22 is provided with internal threads 68 that engage external threads 66 on the proximal end 34 of the body 14 to advance and fix the rear reel capture component 18 to secure the reel foot in place. Corresponding to the cavity 74 of the rear reel capture component 18, the top side 38 of the body 14 may also be provided with another cavity 70 to engage and confine the front end of the reel foot.

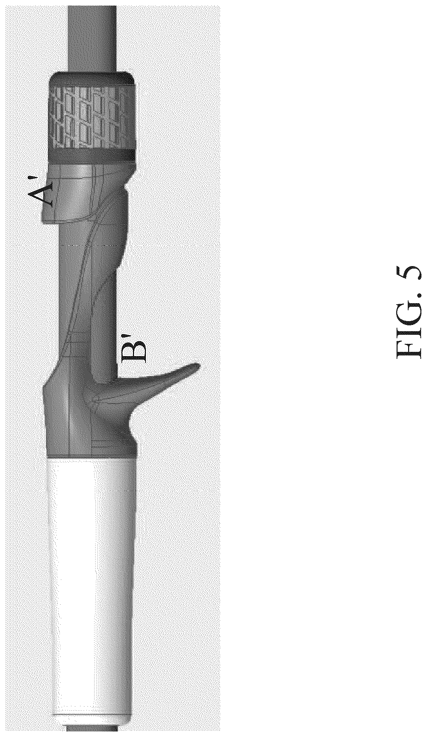

FIG. 5 illustrates another embodiment of a reel seat according to the present disclosure. The embodiment of FIG. 5 incorporates the same limitation as the embodiment of FIGS. 1 - 4, with the exception that it has a single opening in the body to allow a user's fingers to directly contact the rod blank. Therefore, the embodiment of FIG. 5 has a region A' that experiences minimal to no vibration whereas region C' experiences significantly more noticeable vibration.

The preferred embodiments of the disclosure have been described above to explain the principles of the present disclosure and its practical application to thereby enable others skilled in the art to utilize the present disclosure. However, as various modifications could be made in the constructions and methods herein described and illustrated without departing from the scope of the present disclosure, it is intended that all matter contained in the foregoing description or shown in the accompanying drawings, including all materials expressly incorporated by reference herein, shall be interpreted as illustrative rather than limiting. Thus, the breadth and scope of the present disclosure should not be limited by the above-described exemplary embodiment but should be defined only in accordance with the following claims appended hereto and their equivalents.

## Claims

1. A reel seat (10) for a fishing rod having a rod blank (26) with a butt end and a rod tip, comprising:
a body (14) having a proximal end and a distal end and a middle portion therebetween, wherein only the proximal end of the body (14) is directly secured to the rod blank (26) adjacent the butt end of the rod tip, wherein the middle portion and the distal end of the body (14) are spaced from an exterior surface of a portion of the rod blank (26) passing through the middle portion and the distal end of the body (14); and
wherein the body (14) further comprises at least a first opening (58) in a bottom side of the distal end of the body (14), the first opening (58) being configured to allow at least one of a user's fingers to directly contact the rod blank (26).

2. The reel seat (10) for a fishing rod of claim 1, wherein the first opening (58) is configured to allow at least the user's index finger to directly contact the rod blank (26), and the body (14) further comprising:
a second opening (62) in the bottom side of the middle portion of the body (14), the second opening (62) being configured to allow at least one of the user's ring and pinky fingers to directly contact the rod blank (26); and
an integral connection section (54) separating the first (58) and second (62) openings from one another.

3. The reel seat (10) of claim 1 or claim 2, further comprising a front reel foot cavity on a top side adjacent the distal end of the body.

4. The reel seat (10) of any one of claims 1-3, further comprising a rear reel foot component (18) configured to slide onto and along the proximal end of the body (14) and having a rear reel foot cavity (74).

5. The reel seat (10) of claim 4, wherein the proximal end of the body (14) further comprises external threads (66) and further comprising a locking nut (22) having internal threads (68) and configured to engage the external threads (66) of the body (14) and be advanced or retracted along the proximal end of the body (14) to position the rear reel foot component (18).

6. A reel seat (10) for a fishing rod having a rod blank (26) with a butt end and a rod tip, comprising:
a body (14) having a proximal end and a distal end and a middle portion therebetween, wherein only the proximal end of the body (14) is directly secured to the rod blank (26) adjacent the butt end of the rod tip, wherein the middle portion and the distal end of the body (14) are spaced from an exterior surface of a portion of the rod blank (26) passing through the middle portion and distal end of the body (14); the body (14) further comprising:
at least a first opening (58) in a bottom side of the distal end of the body (14), the first opening (58) being configured to allow at least one of a user's fingers to directly contact the rod blank (26); and
external threads (66) adjacent the proximal end of the body (14);
a rear reel foot component (18) configured to slide onto and along the proximal end of the body (14) and having a rear reel foot cavity (74); and
a locking nut (22) having internal threads (68) and configured to engage the external threads (66) of the body (14) and be advanced or retracted along the proximal end of the body (14) to position the rear reel foot component (18).

7. The reel seat (10) of claim 6, wherein the first opening (58) is configured to allow a user's index finger to directly contact the rod blank (26), and the body (14) further comprising:
a second opening (62) in the bottom side of the middle portion of the body (14), the second opening (62) being configured to allow at least one of the user's ring and pinky fingers to directly contact the rod blank (26); and
an integral connection section (54) separating the first (58) and second (62) openings from one another.

8. A reel seat (10) for a fishing rod having a rod blank (26) with a butt end and a rod tip, comprising:
a body (14) having a proximal end and a distal end and a middle portion therebetween, wherein only the proximal end of the body (14) is directly secured to the rod blank (26) adjacent the butt end of the rod tip, wherein the middle portion and the distal end of the body (14) are spaced from an exterior surface of a portion of the rod blank (26) passing through the middle portion and distal end of the body (14); the body (14) further comprising:
a first opening (58) in a bottom side of the distal end of the body (14), the first opening (58) being configured to allow a user's index finger to directly contact the rod blank (26);
a second opening (62) in the bottom side of the middle portion of the body (14), the second opening (62) being configured to allow at least one of the user's ring and pinky fingers to directly contact the rod blank (14);
an integral connection section (54) separating the first (58) and second (62) openings from one another; and
external threads (66) adjacent the proximal end of the body (14);
a rear reel foot component (18) configured to slide onto and along the proximal end of the body (14) and having a rear reel foot cavity (74); and
a locking nut (22) having internal threads (68) and configured to engage the external threads (66) of the body (14) and be advanced or retracted along the proximal end of the body (14) to position the rear reel foot component (18).
